(19) Europäisches Patentamt
European Patent Office
Office européen des brevets

(11) **EP 2 691 780 B1**

(12) **FASCICULE DE BREVET EUROPEEN**

(45) Date de publication et mention
de la délivrance du brevet:
**26.08.2015 Bulletin 2015/35**

(21) Numéro de dépôt: **11723432.8**

(22) Date de dépôt: **30.05.2011**

(51) Int Cl.:
***G01P 15/03*** *(2006.01)*    ***B60R 21/0132*** *(2006.01)*

(86) Numéro de dépôt international:
**PCT/EP2011/058843**

(87) Numéro de publication internationale:
**WO 2012/130338 (04.10.2012 Gazette 2012/40)**

(54) **METHODE ET SYSTEME DE MESURE DE VARIATION DE VITESSE D'UN CORPS MOBILE**

VERFAHREN UND SYSTEM ZUR MESSUNG DER GESCHWINDIGKEITSVARIATIONEN EINES BEWEGLICHEN KÖRPERS

METHOD AND SYSTEM FOR MEASURING VARIATIONS IN THE SPEED OF A MOBILE BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2011 EP 11290158**

(43) Date de publication de la demande:
**05.02.2014 Bulletin 2014/06**

(73) Titulaire: **Siemens S.A.S.**
**93527 Saint-Denis Cedex (FR)**

(72) Inventeur: **CLARISSOU, Yves**
**F-75014 Paris (FR)**

(74) Mandataire: **Maier, Daniel Oliver et al**
**Siemens AG**
**Postfach 22 16 34**
**80506 München (DE)**

(56) Documents cités:
**DE-A1- 3 347 066     DE-A1- 3 915 069**
**DE-A1- 19 602 428     DE-C1- 4 114 992**

**EP 2 691 780 B1**

**Description**

La présente invention concerne un système de mesure d'une variation de vitesse d'un corps mobile en fonction du temps, selon le préambule de la revendication 1.

En particulier, la présente invention se rapporte au domaine des véhicules, notamment des véhicules guidés, nécessitant une mesure sécurisée de leur accélération, comme par exemple les véhicules guidés du domaine ferroviaire. Par « véhicule guidé », il est fait référence aux moyens de transport en commun tels que des bus, trolleybus, tramways, métros, trains ou unités de train, etc., pour lesquels l'aspect sécuritaire est très important. De manière générale, la présente invention s'applique à tout mobile (i.e. à tout corps qui se meut ou qui est mû, comme par exemple un véhicule automobile) contraint à respecter au moins un critère de sécurité d'accélération. Ce critère de sécurité est notamment susceptible de sécuriser ledit mobile lors d'une accélération, par exemple un freinage d'urgence. Par accélération, la présente invention fera référence aux accélérations positives (augmentation de la vitesse en fonction du temps) et aux accélérations négatives ou décélérations (diminution de la vitesse en fonction du temps) du mobile.

Pour nombre de mobiles, en particulier les mobiles permettant le transport de passagers comme par exemples les métros manuels ou automatiques, à roulement fer ou pneu, il est nécessaire de déterminer si l'accélération, positive ou négative, subie par le mobile est supérieure ou non à un seuil prédéfini. Par exemple, afin d'assurer la sécurité d'un véhicule guidé tel un métro, l'accélération de ce dernier lors d'un freinage d'urgence doit impérativement respecter simultanément plusieurs critères de sécurité, dont notamment:

- une valeur de décélération minimale, prise comme hypothèse pour des calculs de distance d'arrêt sécuritaire (typiquement 1, 8m/s$^2$);
- une valeur de décélération maximale, au-delà de laquelle les passagers debout à bord du véhicule risquent de chuter (typiquement : 3,2 m/s$^2$ selon la norme ASCE 21, ou 3,5 m/s$^2$ selon la norme EN 13452).

Le non-respect du premier critère de sécurité (valeur de décélération minimale) est un évènement de gravité I considéré comme "catastrophique" au sens de la norme EN-50126. Le non-respect du second critère de sécurité (valeur de décélération maximale) est un évènement de gravité II considéré comme "critique" ou III considéré comme "marginal" au sens de la norme EN-50126. Un autre critère de sécurité est une variation rapide de la décélération dudit mobile lors d'un freinage d'urgence. En effet, un Jerk de l'ordre de 3 à 6 m/s$^3$ doit être respecté lors d'un freinage d'urgence afin d'assurer la sécurité dudit mobile. Ce Jerk implique une méthode et un dispositif de mesure de la variation de la vitesse du mobile caractérisé par un temps de réponse court.

De nombreuses méthodes et dispositifs de mesure de l'accélération d'un mobile sont connus de l'homme du métier. Certains décéléromètres utilisent par exemple un tube rempli de mercure pour mesurer la décélération du mobile. Ainsi, GB 2 211 942 A ou DE 4 114 992 C2 décrivent des dispositifs aptes à mesurer une accélération à partir d'une mesure électrique ou optique d'un déplacement d'un fluide, en particulier du mercure, contenu à l'intérieur d'un tube en forme de « U » ou de « O », scellé. Malheureusement, ledit tube est fragile, facilement endommageable et donc susceptible de libérer ledit fluide qui peut notamment se révéler nocif lorsqu'il s'agit de mercure. De plus, de tels décéléromètres ne peuvent généralement qu'indiquer la variation de vitesse du mobile en fonction du temps selon un unique sens de déplacement dudit mobile. Chaque sens de déplacement du mobile doit dès lors être associé à son propre dispositif de mesure de l'accélération. En particulier dans le cas de véhicules guidés caractérisés par deux sens de déplacement, respectivement un déplacement en marche avant et un déplacement en marche arrière, deux décéléromètres sont nécessaires afin de couvrir la mesure de l'accélération dans lesdits deux sens de déplacement.

Un autre dispositif de mesure de l'accélération est décrit dans US 4,849,655. Il s'agit d'un dispositif composé de deux éléments, un premier élément fixe et un second élément ayant un mouvement relatif par rapport audit premier élément. Ces deux éléments sont par exemple respectivement un émetteur de champ magnétique et un capteur d'effet hall. Lors d'une accélération, le mouvement relatif entre les deux éléments produit une variation du champ magnétique qui est détectée par le capteur. Ce dernier produit alors un signal corrélé à la variation de vitesse du mobile. Ce signal est notamment utilisé pour contrôler un freinage dudit mobile.

D'autres dispositifs sont notamment basés sur une détection et une mesure d'accélération à partir d'un capteur qui change de tension en fonction de son sens de rotation (US 5,659,137), sur un accélérateur angulaire utilisant le mercure comme masse inertielle (US 3,147,391), sur une mesure de déplacement d'une partie d'un pendule immergé dans un liquide (US 5,134,883). Malheureusement, leurs principes de fonctionnement sont généralement complexes, nécessitant par exemple une analyse de signal, et impliquant aussi un coût de fabrication important. D'autre part, ces dispositifs ne sont pas fiables sur une longue durée de fonctionnement, étant sujet à une usure notamment mécanique de leurs pièces constituantes, ainsi que des pièces coopérant à la mesure d'accélération.

Un but de la présente invention est de proposer un dispositif de mesure d'une variation de la vitesse d'un mobile en fonction du temps qui soit simple, économiquement avantageux, sûr, fiable, et capable d'établir rapidement ladite mesure de ladite variation (i.e. ayant un temps de réponse court, notamment de l'ordre de 100 à 200 ms).

Un autre but de la présente invention est en particulier de permettre une détermination fiable d'un dépassement d'un seuil limite prédéfini d'accélération subie par le mobile, indépendamment d'un traitement d'un signal corrélable à une mesure ou détermination de ladite accélération.

Dans ces buts, un dispositif est proposé par le contenu de la revendication 1. Un ensemble de sous-revendications présente également des avantages de l'invention.

La présente invention propose un dispositif de mesure d'une accélération d'un mobile, ledit dispositif comprenant:

- un corps solide comprenant une cavité intérieure, notamment délimitée par une ou plusieurs parois appartenant audit corps solide, ladite cavité étant en particulier fermable ou obturable et apte à permettre un déplacement libre d'une pièce mobile;
- ladite cavité intérieure dont au moins une desdites parois est apte à former une piste pentue par rapport à l'horizontale, et dont une surface permet ledit déplacement libre, par exemple rectiligne ou curviligne, de ladite pièce mobile sur ladite piste dans ladite cavité intérieure entre une position initiale de repos et une position éloignée de ladite position initiale, située à une extrémité de la cavité intérieure et notamment atteignable par ladite pièce lors d'une variation d'accélération, par exemple lorsque l'accélération dudit mobile est non-nulle et supérieure à une valeur seuil, dès que ledit dispositif est couplé audit mobile. En particulier, lorsque ledit mobile repose à plat sur un plan horizontal et que ledit dispositif selon l'invention est couplé audit mobile afin de mesurer son accélération durant un déplacement dudit mobile, ladite position initiale est apte à être occupée par ladite pièce mobile lorsque la valeur absolue de l'accélération du mobile est inférieure à une valeur minimale, tandis que la position éloignée, située à une extrémité de ladite cavité est atteignable par ladite pièce uniquement lorsque l'accélération dudit mobile est non-nulle, et en particulier lorsque le signe de l'accélération est opposé au signe d'une pente moyenne de la piste (i.e. au symbole algébrique positif ou négatif caractérisant la valeur moyenne de la pente) et que la valeur absolue de l'accélération dépasse une valeur seuil maximale d'accélération. En particulier, ladite pièce mobile est un corps circulaire, notamment de forme cylindrique ou sphérique comme par exemple un cylindre ou une bille creux ou plein apte à se déplacer par rotation sur ladite piste;
- ladite pièce mobile, apte à se déplacer à l'intérieur dudit corps solide, dans ladite cavité intérieure, sous l'effet de l'accélération dudit mobile, en particulier selon une trajectoire rectiligne ou curviligne, de ladite position initiale à ladite position éloignée, l'énergie potentielle de ladite pièce à ladite position éloignée étant en particulier supérieure à l'énergie potentielle de ladite pièce à ladite position de repos lorsque ledit dispositif de
- mesure est couplé audit mobile au repos sur un plan horizontal;
- au moins un détecteur apte à détecter une présence de ladite pièce à ladite position éloignée;

le dispositif selon l'invention étant caractérisé en ce que ledit corps solide comprend en particulier une partie centrale comprenant un ajour destiné à former au moins une partie de ladite cavité, ladite partie centrale étant prise en sandwich, notamment de manière étanche, entre deux parties latérales.

Par piste il est notamment fait référence dans la présente invention à une surface engendrée par un déplacement continu (par exemple entre ladite position initiale et ladite position éloignée) d'une extrémité d'un segment de droite dans un plan perpendiculaire audit segment, comprenant ladite position initiale et ladite position éloignée. Préférentiellement, ladite piste est une surface définie par un segment de courbe plane ou une courbe plane fermée (par exemple un cercle) dont un point passe par un point variable décrivant une droite ou une courbe comprenant ladite position initiale et ladite position éloignée. En d'autres termes, ladite piste est préférentiellement engendrée par un déplacement dudit segment de courbe plane ou de ladite courbe plane fermée le long d'un chemin plan rectiligne ou curviligne reliant ladite position initiale et ladite position éloignée.

Par exemple ladite piste est une bande ayant une coupe transversale rectiligne ou concave "en auget", et une coupe longitudinale curviligne ou rectiligne, ladite bande étant enfermée à l'intérieure de ladite cavité et formant une paroi de cette dernière. De manière préférentielle, au moins une surface de la piste et au moins une surface de ladite pièce, lesdites surfaces étant susceptibles d'entrer en contact l'une avec l'autre, sont caractérisées par une géométrie et un matériau garantissant un frottement faible entre ladite piste et ladite pièce. Par exemple, si ladite pièce se déplace par glissement sur ladite piste, alors la surface de ladite pièce et la surface de ladite piste comprennent respectivement un premier et un second matériau qui, lorsqu'ils sont en contact l'un avec l'autre, sont caractérisés par un faible coefficient de friction et une haute résistance à l'usure. Il s'agit par exemple de carbure de tungstène pour ladite pièce et d'acier pour ladite piste. D'autres couples de matériaux à bas coefficient de friction sont évidemment connus de l'homme du métier.

Avantageusement, ladite partie centrale est notamment d'épaisseur égale ou supérieure à une largeur de ladite pièce, par exemple au diamètre de la bille ou à une hauteur dudit cylindre, et est susceptible de comprendre en particulier ladite piste. De plus, ladite cavité, ainsi formée par cloisonnement de ladite partie centrale avec lesdites parties latérales, peut être soumise à un vide d'air ou remplie d'un gaz particulier. Ledit gaz particulier est par exemple de l'azote susceptible d'éviter toute oxydation de la pièce ou de la cavité et garantissant une faible humidité dans ladite cavité. Evidemment, ladite cavité intérieure dudit corps solide peut être créée selon d'autres méthodes et dispositions connues de l'homme du métier, comme par exemple par usinage, forage, et/ou en particulier en utilisant une seule partie latérale afin d'obturer ladite cavité, ou encore par forage d'une piste-canal de section circulaire dans un corps monobloc, le dit canal pouvant être ensuite bouchonné aux extrémités.

Selon la présente invention, lesdites parties latérales sont aptes à être disposées respectivement de part et d'autre de la partie centrale et à cloisonner ledit ajour, afin de former ladite cavité selon l'invention par cloisonnement dudit ajour. Avantageusement, ledit cloisonnement peut être étanche. Egalement, au moins l'une des parties latérales est au moins susceptible de coopérer avec ledit détecteur afin par exemple de lui servir de support et/ou de permettre ladite détection. En particulier, le détecteur est positionnable en vis-à-vis de ladite position éloignée. Il s'agit par exemple un capteur inductif apte à détecter ladite pièce comprenant dans ce cas au moins une partie métallique, ou d'un capteur optique apte à détecter ladite pièce qui est dans cet autre cas opaque. Dans tous les cas, le matériau de ladite partie latérale est adapté au type de détection effectuée par ledit détecteur: matériau transparent en cas de détection optique de la présence de ladite pièce, ou encore matériau non-conducteur en cas d'utilisation d'un détecteur de métal et d'une pièce constituée d'au moins en partie de métallique.

En particulier, ledit corps solide dudit dispositif selon l'invention est de plus apte à être couplé audit mobile et à coopérer avec un système de freinage dudit mobile. En effet, le détecteur selon l'invention est en particulier capable par exemple de signaler audit système de freinage la présence de ladite pièce à ladite position éloignée. Avantageusement, ledit corps solide du dispositif peut être solidarisé à une partie horizontale du mobile.

Selon un premier mode de réalisation de la présente invention, ladite piste est en particulier une surface plane destinée à former un plan incliné d'un angle $\theta$ par rapport à l'horizontale lorsque ledit corps solide est couplé audit mobile, ce dernier étant au repos sur un plan horizontal. Si le corps solide du dispositif est solidarisé à une partie horizontale dudit mobile, alors, ladite piste forme un angle $\theta$ par rapport à ladite partie horizontale du mobile, par exemple, son plancher. Avantageusement, ladite cavité peut être de forme sensiblement parallélépipédique, une des faces du parallélépipède formant alors ledit plan incliné, i.e. ladite piste.

Selon un second mode particulier de réalisation, ladite piste est une bande décrivant une trajectoire curviligne. Avantageusement, ladite piste peut alors être une piste convexe dont la pente décroît de la position initiale à la position éloignée.

Afin de détecter une accélération positive et négative dudit mobile, deux dispositifs identiques selon l'invention, respectivement un premier et un second dispositif, peuvent être solidarisés symétriquement bout à bout ou solidarisés côte à côte, de façon à ce que le premier dispositif soit apte à mesurer une accélération positive, et le second dispositif une accélération négative. En effet, lorsque ledit mobile repose à plat sur un plan horizontal et que lesdits dispositifs sont couplés audit mobile afin de mesurer son accélération durant un déplacement dudit mobile selon une direction, la valeur de la pente de la piste du premier dispositif en un point de ladite piste du premier dispositif sera opposée à la valeur de la pente de la piste du second dispositif en un point symétrique audit point du premier dispositif, dès que lesdites pentes n'ont pas une valeur nulle. Dès lors, une accélération négative dudit mobile sera apte à être mesurée par le dispositif dont la piste a une pente positive, et une accélération positive sera apte à être mesurée par le dispositif dont la piste a une pente négative, le signe de la pente d'une piste étant de préférence soit positif, soit négatif. La détection des accélérations positives et négatives dudit mobile peut aussi être effectuée par ledit dispositif, en particulier selon un troisième mode de réalisation.

Selon ce troisième mode particulier de réalisation, ledit corps solide comprend notamment une autre cavité délimitée par une ou plusieurs de ses parois, ladite autre cavité étant symétrique à ladite cavité et communiquant avec cette dernière de façon à permettre un déplacement libre de ladite pièce d'une cavité à l'autre. En particulier, ladite autre cavité comprend une autre piste apte à former avec ladite piste de ladite cavité un chemin continu entre ladite position éloignée à une extrémité de ladite cavité et une autre position éloignée située à une extrémité de l'autre cavité. De part la symétrie, ladite position initiale se trouve dès lors à égale distance de ladite position éloignée et de ladite autre position éloignée, i.e. à égale distance des extrémités de chacune des cavités. En particulier, ladite autre piste est un autre plan incliné d'un angle $\pi\text{-}\theta$ (i.e. angle égal et opposé à $\theta$) par rapport à l'horizontale lorsque ledit corps solide est couplé audit mobile au repos sur un plan horizontal, de sorte que ledit plan incliné et ledit autre plan incliné forment sensiblement un dièdre caractérisé par un angle dièdral égal à $\pi\text{-}2\theta$, l'intersection des deux plans correspondant à ladite position initiale et l'extrémité, notamment fermée, de ladite autre cavité correspondant ladite autre position éloignée atteignable par ladite pièce lorsque l'accélération dudit mobile est non-nulle, et que le signe de l'accélération est opposé au signe d'une pente moyenne de l'autre piste et que la valeur absolue de l'accélération dépasse une valeur seuil maximale d'accélération, ladite autre position éloignée étant de plus symétrique à ladite position éloignée, et ladite pièce pouvant librement se déplacer sous l'effet de l'accélération dudit mobile, en particulier de manière rectiligne, de ladite position initiale à l'une ou l'autre desdites positions éloignées en fonction du signe positif ou négatif de l'accélération du mobile.

Quel que soit le mode de réalisation de la présente invention, un ou plusieurs détecteurs peuvent être placés le long de la piste afin de détecter respectivement un ou plusieurs niveaux d'accélération. De plus, au moins une desdites positions initiale ou éloignées comprend en particulier un aimant apte à coopérer avec au moins une partie métallique de ladite pièce afin de stabiliser ladite pièce à ladite position par aimantation de la pièce à ladite position. Ledit aimant peut avantageusement être noyé dans ledit corps solide au voisinage de ladite position. De plus, au moins une desdites positions initiale ou éloignées peut en particulier être équipée d'un tampon d'arrêt, par exemple en matériau absorbant, apte à amortir un effet de choc entre ladite pièce et l'extrémité de la cavité et/ou de l'autre cavité.

Selon la présente invention, l'énergie potentielle qu'est susceptible d'acquérir ladite pièce mobile lorsqu'elle est à ladite position éloignée ou à ladite autre position éloignée est préférentiellement supérieure à l'énergie potentielle qu'est susceptible d'acquérir ladite pièce lorsqu'elle est à ladite position initiale, lorsque le dispositif selon l'invention est monté ou fixé audit mobile au repos sur un plan horizontal. En d'autres termes, le positionnement dans ledit corps solide de ladite position initiale et de ladite position éloignée ou de ladite autre position éloignée est préférentiellement caractérisé en ce que, lorsque le dispositif selon l'invention est monté ou fixé audit mobile au repos sur un plan horizontal, l'énergie potentielle de ladite pièce mobile à ladite position éloignée ou à ladite autre position éloignée est supérieure à l'énergie potentielle de ladite pièce à ladite position initiale.

Des exemples de réalisations et d'applications fournis à l'aide des figures suivantes aideront à mieux comprendre la présente invention. Les numéros de référence utilisés dans une figure sont repris de manière cohérente dans les autres figures.

Figure 1    exemple de réalisation selon l'invention d'un dispositif de mesure de l'accélération couplé à un véhicule.

Figure 2    exemple de réalisation selon l'invention d'un dispositif de mesure de l'accélération d'un mobile.

Figure 3    exemple de réalisation selon l'invention d'un dispositif de mesure de l'accélération d'un mobile selon un autre mode de réalisation.

Figure 4    exemple de réalisation selon l'invention d'un dispositif de mesure de l'accélération d'un mobile comprenant un corps solide monobloc.

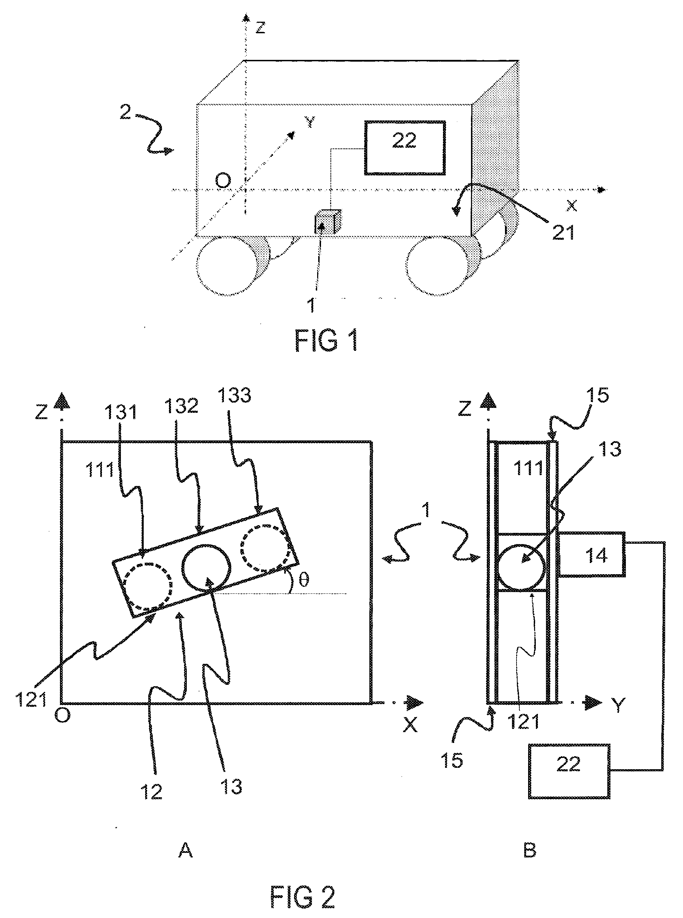

A titre d'exemple, la figure 1 montre un dispositif 1 de mesure d'accélération d'un mobile selon l'invention, ledit mobile étant en particulier un véhicule 2 auquel le dispositif 1 est accouplé. Ledit dispositif 1 peut en particulier être fixé à un plancher 21 horizontal dudit véhicule 2 et être connecté à un système de freinage 22 dudit véhicule. Avantageusement, il permet d'identifier de manière rapide, sûre et fiable un dépassement d'une valeur seuil maximale, en particulier prédéfinie, d'accélération dudit véhicule, que ce soit un véhicule ferroviaire, un métro/tramway en roue en fer ou pneumatique, et de limiter ladite accélération en transmettant un signal apte à informer le système de freinage 22 dudit dépassement. Ledit signal peut par exemple être transmis soit directement dans des réseaux pneumatiques, hydrauliques, ou électriques du véhicule, soit à une unité centrale de contrôle du freinage, ou encore soit à une unité générale de contrôle du véhicule, comme par exemple une unité de contrôle d'un train automatique.

Un repère orthonormé (O, x, y, z) tel que présenté en Fig. 1 sera utilisé dans la suite de la description afin d'aider le lecteur à comprendre la présente invention. Ce repère orthonormé est un repère conventionnel permettant de positionner ledit dispositif 1 par rapport au véhicule. Ce repère comprend un axe longitudinal (Ox) parallèle à une direction de déplacement du véhicule (par exemple parallèle à des rails assurant un guidage dudit véhicule), un axe transversal (Oy) perpendiculaire à l'axe longitudinal (Ox) et un axe vertical (Oz) perpendiculaire au plan formé par l'axe longitudinal (Ox) et l'axe transversal (Oy). L'axe vertical (Oz) est notamment perpendiculaire au plancher du véhicule 2. Il est aussi perpendiculaire au sol sur lequel le véhicule est apte à se déplacer lorsque ledit sol est une surface plane horizontale, sans dévers.

La figure 2 présente une coupe latérale A et une coupe transversale B d'un exemple de réalisation selon l'invention d'un dispositif 1 de mesure de l'accélération d'un mobile pouvant équiper ledit mobile tel que présenté en Fig. 1, ledit dispositif étant notamment capable de signaler un dépassement par ladite accélération d'une valeur seuil d'accélération prédéfinie, ledit dispositif comprenant:

- un corps solide comprenant une cavité 12 intérieure;
- ladite cavité 12 dont au moins une paroi est apte à former une piste 121 dont la surface permet un déplacement libre d'une pièce 13 mobile, en particulier une bille, sur ladite piste 121 dans ladite cavité 12 entre une position initiale 131 de repos et une position éloignée 133 de ladite position initiale, ladite position éloignée étant située à une extrémité de la cavité. Avantageusement, ladite piste 121 est en particulier une surface plane destinée à former un plan incliné d'un angle θ par rapport à l'horizontale, de sorte que la piste soit caractérisée par une pente positive constante. De plus, ladite position initiale 131 est en particulier apte à être occupée par ladite pièce 13 lorsque la valeur absolue de l'accélération du mobile est inférieure à une valeur seuil minimale positive, tandis que la position éloignée 133, située à une extrémité de ladite cavité est atteignable par ladite pièce 13 sous l'effet de l'accélération dudit mobile lorsque l'accélération dudit mobile est non-nulle, et que le signe de l'accélération est opposé au signe de la pente de la piste et la valeur absolue de l'accélération dépasse une valeur seuil maximale positive d'accélération. Pour une accélération dudit mobile comprise entre la valeur seuil minimale et ladite valeur seuil maximale, la géométrie de ladite piste permet à ladite pièce 13 de se positionner à une position intermédiaire 132 entre les positions initiale 131 et éloignée 133;

- ladite bille 13, apte à se déplacer librement sous l'effet de l'accélération du mobile selon une trajectoire rectiligne sur le plan incliné dans ladite cavité de ladite position initiale 131 à ladite position éloignée 133 et inversement;
- au moins un détecteur 14 apte à détecter une présence de ladite bille 13 à ladite position éloignée 133 et à coopérer avec un système de freinage 22 dudit mobile, par exemple en fournissant une information relative à ladite présence sous forme d'un signal électrique pouvant notamment être transmis audit système de freinage 22 apte à contrôler et commander le freinage dudit mobile. En particulier, plusieurs types de détecteurs sont envisageables pour effectuer la détection de la présence de la pièce, que ce soit ladite bille 13 ou un cylindre mobile. Il s'agit par exemple d'une détection par capteur de proximité métallique de type inductif ou encore, une détection optique comprenant notamment un émetteur et un récepteur situés transversalement de part et d'autre de la cavité, par exemple en vis-à-vis de ladite position initiale 131 et/ou éloignée 133.

Ledit corps solide est en particulier constitué d'au moins un matériau dur facilement usinable (métal, céramique ou plastique dur) et peut comprendre un moyen de fixation apte à fixer rigidement ledit corps solide sur un châssis ou dans une caisse du mobile de façon à ce que ledit plan incliné soit incliné dudit angle $\theta$ par rapport à l'horizontal lorsque le mobile est sur un plan horizontal. En particulier, ledit corps solide comprend un moyen d'inclinaison (par exemple à vis ou à ressort) permettant de varier ledit $\theta$ par rapport à l'horizontal lorsque le mobile est sur un plan horizontal afin de varier ladite valeur seuil d'accélération. Préférentiellement, ladite pièce 3 est constituée de métal (acier ou acier inoxydable). Ledit corps solide peut en particulier comprendre une partie centrale 111 comprenant au moins une partie de ladite cavité 12, et deux parties latérales 15 pouvant en particulier être situées de part et d'autre de ladite partie centrale 111 afin de former de manière étanche ladite cavité 12 avec ladite partie centrale 111 et afin de maintenir transversalement (i.e. d'assurer un maintien transversal selon y) ladite pièce 13 mobile.

Le détecteur 14 selon l'invention est de préférence un capteur inductif apte à réagir à une nature métallique conductrice d'électricité de ladite pièce 13, ou un capteur optique apte à réagir à une nature opaque de ladite pièce. A cette fin, au moins une desdites parties latérales 15, en particulier la partie latérale susceptible de servir de support audit capteur, comprend une zone transparente à des signaux utilisés par le détecteur 14 pour détecter ladite pièce 13. Il peut s'agir d'une zone optiquement transparente permettant la détection optique de ladite pièce 13, ou d'une zone formée d'un matériau non-conducteur dans le cas d'une détection par induction.

De façon connue, lors d'un déplacement dudit mobile sur une voie plane sans dévers, l'accélération de ladite pièce 13 selon l'axe vertical (Oz) est l'accélération de la pesanteur g, et l'accélération **a** selon l'axe longitudinal (Ox) est la dérivée seconde du mouvement x(t) dudit mobile tel que $\mathbf{a} = d^2\mathbf{x}/dt^2$. La position initiale 131 de repos de ladite pièce 13 mobile est la position occupée par ladite pièce 13 lorsque ledit mobile est en accélération positive selon l'axe longitudinal (Ox), lorsque ledit mobile est au repos ou a une vitesse constante, et lorsque le mobile a une accélération négative (ou décélération) modérée inférieure à une valeur seuil minimale positive d'accélération, par exemple $g \cdot \tan(\theta)$, $\theta$ étant compris dans ce cas dans l'intervalle $[0, \pi/2]$. La position éloignée 133 de ladite pièce 13 est la position occupée par ladite pièce 13 lorsque le mobile est en accélération négative ou décélération telle que ladite décélération dépasse une valeur seuil maximale d'accélération, par exemple lorsque la décélération est supérieure à $g \cdot \tan(\theta)$, $\theta$ étant compris dans ce cas dans l'intervalle $[0, \pi/2]$.

Si le mobile se déplace sur une voie en pente caractérisée par une valeur p d'angle de pente, un changement de repère consistant en une rotation d'angle p autour de l'axe (Oy) permet de déterminer que l'accélération de ladite pièce 13 selon l'axe (Oz) est égale à $g \cdot \cos(p)$ qui est proche de g pour des pentes p faibles (approximation des petits angles), et l'accélération selon l'axe (Ox) est égale à $\mathbf{a} = d^2\mathbf{x}/dt^2 + g \cdot \sin(p)$. Comme cette dernière accélération affecte aussi bien le dispositif selon l'invention que des passagers dudit mobile, nul correction de pente n'est nécessaire afin de corriger une influence de la pente sur ledit dispositif selon l'invention. Ainsi, le dispositif selon l'invention est apte à fonctionner de la même façon que ledit mobile se déplace sur un plan horizontal ou sur une voie en pente, par exemple sur un plan incliné.

Egalement, l'influence du dévers d'une voie sur laquelle se déplacerait ledit mobile comprenant ledit dispositif selon l'invention peut être évaluée. En effet, sur une voie en dévers caractérisé par une valeur d d'angle de dévers, un changement de repère consistant en une rotation d'angle d autour de l'axe X permet de calculer de manière aisée l'accélération perçue par ladite pièce 13. En effet, dans ce cas, l'accélération perçue selon (Oz) est égale à $g \cdot \cos(d)$, dont la valeur est voisine de g pour de petits angles d de dévers. L'accélération perçue par la pièce 13 selon l'axe (Ox) est inchangée $\mathbf{a} = d^2\mathbf{x}/dt^2$. Ainsi, le dispositif selon l'invention est apte à fonctionner de la même façon que ledit mobile accélère sur une voie avec ou sans dévers.

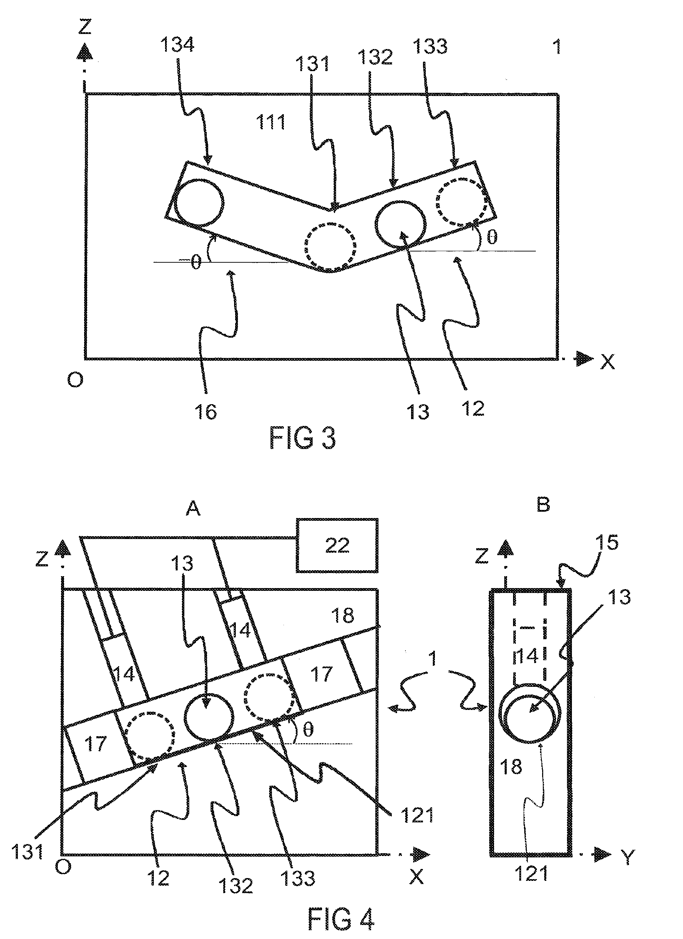

La figure 3 présente une coupe transversale du dispositif selon l'invention selon un autre mode de réalisation correspondant audit troisième mode de réalisation préalablement cité. En effet, selon cet autre mode de réalisation, ledit corps solide du dispositif 1 comprend notamment une autre cavité 16 symétriquement identique à ladite cavité 12, communiquant avec cette dernière, et comprenant une autre piste apte à former avec ladite piste de ladite cavité 12 un chemin continu entre ladite position éloignée 133 située à une extrémité de ladite cavité 12 et une autre position éloignée 134 située à une extrémité de l'autre cavité 16, ladite autre position éloignée 134 et ladite position éloignée 133 pouvant chacune être équipée d'un détecteur selon l'invention. De part la symétrie, ladite position initiale 131 se trouve dès lors à mi-chemin desdites extrémités. En particulier, ladite autre piste est un autre plan incliné d'un angle $\pi$-$\theta$ (i.e. angle égal et opposé à $\theta$) par rapport à l'horizontale lorsque ledit corps solide est couplé audit mobile au repos sur un plan horizontal, de sorte que ledit plan incliné et ledit autre plan incliné forment un dièdre caractérisé par un angle diédral égal à $\pi$-$2\theta$.

En particulier, chacune des cavités 16 et 12 peuvent être creusées ou usinées dans une partie centrale 111 du corps solide du dispositif 1, et des parties latérales peuvent fermer ou cloisonner latéralement ladite cavité et ladite autre cavité afin de former une enceinte fermée formée des deux cavités, apte à comprendre ladite pièce 13 mobile et à permettre son déplacement de l'une à l'autre des cavités. La pièce 13 mobile peut en particulier être soit une bille, soit un cylindre (plein ou creux).

Le dispositif selon l'invention décrit en Fig. 3 est ainsi capable de mesurer un dépassement d'une valeur seuil maximale d'accélération positive et de décélération. Il s'agit donc d'un système bidirectionnel apte à contrôler l'accélération de véhicules pouvant notamment être réversibles, tel que les véhicules ferroviaires, métros et tramways. Selon ce mode de réalisation préféré du dispositif décrit en Fig. 3, la position initiale 131 de repos de ladite pièce 13 mobile est la position occupée par ladite pièce 13 lorsque ledit mobile est en accélération (positive ou négative) modérée selon l'axe longitudinal (Ox) inférieure en valeur absolue à une valeur seuil minimale positive, par exemple égale à la valeur absolue de g·tan($\theta$), ou encore lorsque ledit mobile est au repos ou a une vitesse constante. La position éloignée 133 de ladite pièce 13 est la position occupée par ladite pièce 13 lorsque le mobile est en accélération négative, ou décélération, et que ladite décélération dépasse en valeur absolue une valeur seuil maximale d'accélération positive (ou une valeur absolue maximale d'accélération), par exemple lorsque la décélération est supérieure à la valeur absolue de g·tan($\theta$). L'autre position éloignée 134 de ladite pièce 13 est symétriquement disposée par rapport à ladite position éloignée 133 (axe de symétrie passant par la position initiale 131 et perpendiculaire à l'horizontale) et est la position occupée par ladite pièce 13 lorsque le mobile est en accélération positive, et que ladite accélération positive dépasse une autre valeur seuil maximale d'accélération positive, par exemple lorsque l'accélération positive dudit mobile est supérieure à la valeur absolue de g·tan($\theta$). Chacune des positions 131, 133, 134, i.e. que ce soit la position initiale 131, la position éloignée 133 ou l'autre position éloignée 134, peut avantageusement être équipée d'un détecteur apte à détecter la présence de ladite pièce 13.

Avantageusement, le dispositif selon l'invention, quel que soit son mode de réalisation, est en particulier apte à comprendre des moyens de stabilisation de ladite pièce 13 à au moins une position sur ladite piste dans ladite cavité 12 et/ou dans ladite autre cavité 16. Ces moyens de stabilisation permettent d'éviter des mouvements erratiques de la pièce 13, notamment lorsqu'une décélération est voisine de la valeur seuil maximale. De manière préférentielle, un aimant apte à être noyé dans ledit corps solide au voisinage de la position initiale 131, et/ou à la position éloignée 133 et/ou à l'autre position éloignée 134, permet de stabiliser ladite pièce 13 à ladite position initiale 131, et/ou à la position éloignée 133, et/ou à l'autre position éloignée 134, en exerçant sur ladite pièce 13 une force d'attraction. Dans ce cas, un mouvement de ladite pièce 13 hors de la position initiale 131 (ou similairement desdites positions éloignées 133, 134) nécessite un surcroit d'accélération **da** par rapport à la valeur seuil maximale g·tan($\theta$) afin de pouvoir vaincre la force d'attraction exercée par l'aimant.

Un autre moyen préférentiel de stabilisation selon l'invention consiste à utiliser une piste de forme convexe, dont la pente décroit lorsque la pièce 13 chemine de la position initiale 131 à la position éloignée 133, et dans le cas particulier de la Fig. 3 où une autre cavité 16 communique avec ladite cavité 12, la valeur absolue de la pente décroit lorsque la pièce 13 chemine de la position initiale 131 à l'autre position éloignée 134.

Chacun desdits moyens de stabilisation cités précédemment introduit un effet d'hystérésis dans le comportement du dispositif selon l'invention en ce qu'un déplacement de ladite pièce 13 de la position initiale 131 à la position éloignée 133 nécessite une décélération supérieure à **a** + **da,** et en ce qu'un déplacement de ladite pièce 13 de ladite position éloignée 133 à ladite position initiale 131 nécessite une décélération a - da.

De manière préférentielle, au moins une desdites positions initiale 131 ou éloignées 133 ou 134 comprend un système d'amortissement de ladite pièce 13 afin d'éviter des chocs entre ladite pièce 13 et une paroi du corps solide, notamment avec l'extrémité de l'une ou l'autre des cavités. Par exemple, un tampon d'arrêt en matériau absorbant tel du caoutchouc peut être disposé à au moins une extrémité de ladite cavité et/ou de ladite autre cavité.

Le dispositif selon l'invention est en particulier solidarisable audit mobile au moyen de dispositifs de solidarisations (par exemple système de vis ou d'accroches) apte à solidariser le corps solide du dispositif selon l'invention au mobile, par exemple au plancher d'un véhicule. Lesdits moyens de solidarisation permettent préférentiellement un réglage fin des valeurs seuil maximales et minimales d'accélération par ajustement d'un angle de pose du dispositif par rapport au mobile, par exemple par rapport au plancher du véhicule.

De manière préférentielle, ladite pièce 13 est une bille d'acier de diamètre égal ou inférieur à une distance D séparant sur la piste la position initiale de la position éloignée, une valeur seuil maximale de décélération est fixée et choisie égale à $a_0$ = 2,2 m/s$^2$, et une pente dudit plan incliné est définie par tan($\theta$) = 2,2 / 9,81 = 0,224. En supposant que la décélération, initialement faible, varie au cours du temps selon un Jerk J constant, il s'ensuit que l'accélération **a** (i.e. la décélération instantanée) du mobile est dans ce cas donnée par a = $a_0$ + J·t. Dès que l'accélération **a** dépasse la valeur seuil maximale $a_0$ = 2,2m/s$^2$, les lois du mouvement de Newton appliquées à la bille impliquent:

$$F = M \cdot [a \cdot \cos(\theta) - g \cdot \sin(\theta)] = (M+I) \cdot d^2 s/dt^2$$

où

F est une force;
t est le temps;
M est la masse de la bille;
I est la masse équivalente à l'inertie tournante de la bille égale à 2/5·M;
s est l'abscisse de la bille le long de la piste.

L'équation du mouvement de la bille le long de la piste devient alors:

$$d^2 s/dt^2 = 5/7 \cdot [a \cdot \cos(\theta) - g \cdot \sin(\theta)]$$

En considérant de plus qu'à l'instant t=0, $a_0$ = g·tan($\theta$), l'équation du mouvement devient:

$$d^2 s/dt^2 = 5/7 \cdot J \cdot \cos(\theta) \cdot t$$

En estimant des valeurs de Jerk égales à 3m/s$^3$ et 6m/s$^3$, une première piste plane de pente constante et une seconde piste convexe dont la pente évolue linéairement de tan($\theta$) = 0,224 à tan($\theta$) = 0.184 en provoquant une hystérésis de $\pm$ 0.2 m/s$^2$, et en considérant deux valeurs pour la distance D, respectivement égales à 5 mm et 10 mm, la présente invention permet d'obtenir les résultats suivants:

| Données | | | Résultats | |
|---|---|---|---|---|
| J [m/s$^3$] | hysteresis [m/s$^2$] | distance [m] | Temps de réponse [s] | Décélération à la détection [m/s$^2$] |
| 3 | 0 | 0.005 | 0.24 | 2.72 |
| 6 | 0 | 0.005 | 0.19 | 3.14 |
| 3 | 0.2 | 0.005 | 0.23 | 2.89 |
| 6 | 0.2 | 0.005 | 0.19 | 3.34 |
| 3 | 0 | 0.01 | 0.31 | 2.93 |
| 6 | 0 | 0.01 | 0.24 | 3.44 |
| 3 | 0.2 | 0.01 | 0.29 | 3.07 |
| 6 | 0.2 | 0.01 | 0.24 | 3.64 |

Ce tableau permet dès lors de conclure que la mesure du dépassement d'une valeur seuil de décélération sera la plus performante pour une distance D faible, par exemple 5 mm et pour une piste rectiligne dans un plan incliné, sans hystérésis.

Ainsi, la présente invention permet d'identifier et de signaler un dépassement d'un niveau d'accélération longitudinal d'un mobile de manière simple, en évitant une utilisation d'un système d'analyse électronique susceptible de tomber en panne, augmentant dès lors la fiabilité de la mesure dudit dépassement.

Finalement, la figure 4 présente un autre mode de réalisation particulier du dispositif selon l'invention qui reprend les mêmes références et le même agencement tel que proposé pour la figure 2, en présentant une coupe latérale A et une coupe transversale B, mais à la différence que ledit corps solide 18 est un corps monobloc, par exemple un corps monobloc de plexiglas, dans lequel ladite cavité 12 a une forme cylindrique obtenue par forage dudit corps solide 18 et dont chacune des extrémités peuvent être fermées par vissage d'un bouchon 17 susceptible de comprendre ou non un tampon d'amortissement destiné à amortir un choc de la bille 13 contre ledit bouchon 17. En particulier, au moins un autre forage dans ledit corps solide 18, notamment perpendiculaire à une génératrice dudit cylindre creux, permet de disposer à l'intérieur dudit corps solide 18, au moins un détecteur 14 capable de détecter une présence de ladite bille 13 au moins à ladite position éloignée 133 et/ou à ladite position initiale 131. Préférentiellement, chaque détecteur 14 est capable de coopérer avec un système de freinage 22 dudit mobile, et est préférentiellement centré sur la position de ladite bille 13 à ladite position initiale 131 et à ladite position éloignée 133.

Avantageusement, la section circulaire de la cavité 12 cylindrique permet de garantir une stabilité de déplacement de la bille 13 dans ladite cavité 12. La piste 121 engendrée par ladite cavité 12 est ainsi une surface définie par une courbe plane circulaire fermée, i.e. le cercle défini par ladite section circulaire, dont un point passe par un point variable décrivant une droite passant par ladite position initiale 131 et ladite position éloignée 133. Ladite piste 121 est ainsi, selon cet autre mode de réalisation préférentiel, une surface concave caractérisée par une pente positive constante entre ladite position initiale 131 et ladite position éloignée 133. En particulier, la cavité 12 cylindrique est caractérisée par un diamètre supérieur au diamètre de ladite bille 13 afin de permettre un déplacement libre de la bille 13 dans ladite cavité.

Comme pour la figure 2, ladite position initiale 131 est en particulier apte à être occupée par ladite pièce 13 lorsque la valeur absolue de l'accélération du mobile est inférieure à une valeur seuil minimale positive, tandis que la position éloignée 133, située à une extrémité de ladite cavité est atteignable par ladite pièce 13 sous l'effet de l'accélération dudit mobile lorsque l'accélération dudit mobile est non-nulle, et que le signe de l'accélération est opposé au signe de la pente de la piste et la valeur absolue de l'accélération dépasse une valeur seuil maximale positive d'accélération. Pour une accélération dudit mobile comprise entre la valeur seuil minimale et ladite valeur seuil maximale, la géométrie de ladite piste permet à ladite pièce 13 de se positionner à une position intermédiaire 132 entre les positions initiale 131 et éloignée 133.

En résumé, le dispositif selon l'invention présente plusieurs avantages par rapport aux dispositifs et méthodes de mesure d'une accélération existants en ce que:

- ils évitent les effets néfastes du frottement et de l'usure en permettant un choix de matériaux durs pour ladite pièce 13 et la piste (par exemple, bille en acier apte à rouler sur une piste en acier ou en céramique);
- les effets néfastes de la corrosion sont évités par la construction étanche et par le choix des matériaux. Au besoin, pour éviter toute oxydation interne, un gaz inerte (par exemple azote ou argon) peut être introduit lors du montage en substitution de l'air;
- ils sont fiables et durables en ce que le dispositif comprend un unique élément mobile, ladite pièce 13, très simple et protégé des agressions extérieures en étant situé dans ladite cavité étanche;
- ils permettent aussi une sécurisation de la détection de la présence de ladite pièce 13, notamment par redondance homogène (par exemple, deux capteurs sont situés transversalement de part et d'autre de la position éloignée de la pièce 13), ou par redondance hétérogène (par exemple un capteur est apte à détecter la présence de ladite pièce 13 à chaque position initiale ou éloignée, ou encore par contrôle de cohérence avec un mouvement du mobile, en vérifiant notamment que ladite pièce est détectée à la position initiale (ou respectivement, n'est pas détectée à la position éloignée) lors de chaque immobilisation du mobile;
- ils sont de sécurité intrinsèque, car basés sur des phénomènes d'accélération et d'inertie;
- ils sont garants de mesures précises et reproductibles de dépassement d'une valeur seuil d'accélération pour ledit mobile: la précision et la reproductibilité du comportement sont déterminées par la géométrie du dispositif selon l'invention (pièce mobile et piste), qui est invariable dans le domaine de température envisagé (-40°C à +70°C);
- le dispositif selon l'invention est insensible aux vibrations spécifiées par la norme IEC-61373 (tableau 1) selon les axes (Ox), (Oy), (Oz);
- ils permettent de contrôler un temps de réaction nécessaire pour mesurer un dépassement d'une valeur seuil d'accélération en ajustant une position du détecteur par rapport à ladite piste. En effet, la rapidité de réaction est déterminée par la distance à parcourir entre les deux positions extrêmes (initiale et éloignée) sur la piste. Cette distance peut être réduite jusqu'aux limites de résolution permise par la résolution spatiale du détecteur de présence de ladite pièce. Typiquement, une distance égale à une fois le diamètre d'une bille choisie comme pièce 13 est suffisant afin de permettre une détection performante.

**Revendications**

1. Dispositif (1) de mesure d'une accélération d'un mobile, ledit dispositif comprenant:

- un corps solide comprenant une cavité (12) intérieure apte à permettre un déplacement libre d'une pièce (13) mobile;
- ladite cavité (12) dont au moins une paroi est apte à former une piste (121) pentue dont une surface permet ledit déplacement libre de ladite pièce (13) mobile sur ladite piste (121) dans ladite cavité (12) entre une position initiale (131) de repos et une position éloignée (133) de ladite position initiale, située à une extrémité de ladite cavité (12) et atteignable par ladite pièce (13) lors d'une variation de ladite accélération;
- ladite pièce (13), apte à se déplacer dans ladite cavité (12) sous l'effet de l'accélération dudit mobile, de ladite position initiale à ladite position éloignée;
- au moins un détecteur (14) apte à détecter une présence de ladite pièce (13) à ladite position éloignée ;

**caractérisé en ce que** ledit corps solide comprend une partie centrale (111) comprenant un ajour destiné à former au moins une partie de ladite cavité (12), ladite partie centrale (111) étant prise en sandwich entre deux parties latérales (15).

2. Dispositif selon la revendication 1 **caractérisé en ce que** ladite partie centrale (111) comprend ladite piste (121).

3. Dispositif selon une des revendications 1 ou 2 **caractérisé en ce que** ledit détecteur (14) est positionnable en vis-à-vis de ladite position éloignée (133).

4. Dispositif selon une des revendications 1 à 3 **caractérisé en ce que** ledit détecteur (14) est un capteur inductif et ladite pièce (13) comprend au moins une partie métallique.

5. Dispositif selon une des revendications 1 à 3 **caractérisé en ce que** ledit détecteur (14) est un capteur optique et ladite pièce est opaque (13).

6. Dispositif selon une des revendications 1 à 5 **caractérisé en ce que** ledit corps solide est apte à être couplé audit mobile et ledit détecteur (14) à coopérer avec un système de freinage (22) dudit mobile.

7. Dispositif selon une des revendications 1 à 6 **caractérisé en ce que** ladite piste (121) est une surface plane destinée à former un plan incliné d'un angle θ par rapport à l'horizontale lorsque ledit corps solide est couplé audit mobile au repos sur un plan horizontal.

8. Dispositif selon une des revendications 1 à 7 **caractérisé en ce que** ladite cavité (12) est de forme sensiblement parallélépipédique.

9. Dispositif selon une des revendications 1 à 6 **caractérisé en ce que** ladite piste (121) est une bande décrivant une trajectoire curviligne.

10. Dispositif selon une des revendications 1 à 9 **caractérisé en ce que** ledit corps solide comprend une autre cavité (16) symétrique à ladite cavité (12), communiquant avec cette dernière, et comprenant une autre piste apte à former avec ladite piste (121) de ladite cavité (12) un chemin continu entre ladite position éloignée (133) située à une extrémité de ladite cavité (12) et une autre position éloignée (134) située à une extrémité de l'autre cavité (16).

11. Dispositif selon une des revendications 1 à 10 **caractérisé en ce qu'**au moins une desdites positions initiale (131) ou éloignées (133, 134) comprend un aimant apte à coopérer avec au moins une partie métallique de ladite pièce (13) afin de l'y stabiliser.

12. Dispositif selon une des revendications 1 à 11 **caractérisé en ce qu'**au moins une desdites positions initiale (131) ou éloignées (133, 134) est équipée d'un tampon d'arrêt apte à amortir un effet de choc entre ladite pièce (13) et une paroi du corps solide.


**Patentansprüche**

1. Vorrichtung (1) zur Messung einer Beschleunigung eines sich bewegenden Objekts, wobei die Vorrichtung umfasst:

- einen Festkörper, der einen inneren Hohlraum (12) umfasst, der geeignet ist, eine freie Verlagerung eines beweglichen Teils (13) zu ermöglichen;

- diesen Hohlraum (12), von dem wenigstens eine Wand geeignet ist, eine geneigte Bahn (121) zu bilden, von der eine Fläche diese freie Bewegung des beweglichen Teils (13) auf dieser Bahn (121) in dem Hohlraum (12) zwischen einer anfänglichen Ruheposition (131) und einer von dieser Anfangsposition entfernten Position (133) ermöglicht, die sich an einem Ende des Hohlraums (12) befindet und von dem Teil (13) bei einer Änderung der Beschleunigung erreichbar ist;

- dieses Teil (13), das geeignet ist, sich in dem Hohlraum (12) unter der Wirkung der Beschleunigung des sich bewegenden Objekts von der Anfangsposition zu der entfernten Position zu verlagern;

- mindestens einen Detektor (14), der geeignet ist, ein Vorhandensein des Teils (13) an der entfernten Position zu erkennen;

**dadurch gekennzeichnet, dass** der Festkörper einen mittleren Teil (111) umfasst, der einen Durchbruch umfasst, der dazu bestimmt ist, wenigstens einen Teil des Hohlraums (12) zu bilden, wobei der mittlere Teil (111) sandwichartig zwischen zwei seitlichen Teilen (15) angeordnet ist.

2. Vorrichtung nach Anspruch 1, **dadurch gekennzeichnet, dass** der mittlere Teil (111) die Bahn (121) umfasst.

3. Vorrichtung nach einem der Ansprüche 1 oder 2, **dadurch gekennzeichnet, dass** der Detektor (14) gegenüber der entfernten Position (133) positionierbar ist.

4. Vorrichtung nach einem der Ansprüche 1 bis 3, **dadurch gekennzeichnet, dass** der Detektor (14) ein induktiver Sensor ist und das Teil (13) wenigstens einen metallischen Teil umfasst.

5. Vorrichtung nach einem der Ansprüche 1 bis 3, **dadurch gekennzeichnet, dass** der Detektor (14) ein optischer Sensor ist und das Teil (13) undurchsichtig ist.

6. Vorrichtung nach einem der Ansprüche 1 bis 5, **dadurch gekennzeichnet, dass** der Festkörper geeignet ist, mit dem sich bewegenden Objekt gekoppelt zu werden, und der Detektor (14) geeignet ist, mit einem Bremssystem (22) des sich bewegenden Objekts zusammenzuwirken.

7. Vorrichtung nach einem der Ansprüche 1 bis 6, **dadurch gekennzeichnet, dass** die Bahn (121) eine ebene Fläche ist, die dazu bestimmt ist, eine um einen Winkel $\theta$ bezüglich der Horizontalen geneigte Ebene zu bilden, wenn der Festkörper mit dem sich bewegenden Objekt im Ruhezustand auf einer horizontalen Ebene gekoppelt ist.

8. Vorrichtung nach einem der Ansprüche 1 bis 7, **dadurch gekennzeichnet, dass** der Hohlraum (12) im Wesentlichen die Form eines Parallelepipeds hat.

9. Vorrichtung nach einem der Ansprüche 1 bis 6, **dadurch gekennzeichnet, dass** die Bahn (121) ein Streifen ist, der eine krummlinige Trajektorie beschreibt.

10. Vorrichtung nach einem der Ansprüche 1 bis 9, **dadurch gekennzeichnet, dass** der Festkörper einen weiteren Hohlraum (16) umfasst, der zu dem Hohlraum (12) symmetrisch ist, mit diesem Letzteren kommuniziert und eine weitere Bahn umfasst, die geeignet ist, mit der Bahn (121) des Hohlraums (12) einen durchgehenden Weg zwischen der entfernten Position (133), die sich an einem Ende des Hohlraums (12) befindet, und einer weiteren entfernten Position (134), die sich an einem Ende des weiteren Hohlraums (16) befindet, zu bilden.

11. Vorrichtung nach einem der Ansprüche 1 bis 10, **dadurch gekennzeichnet, dass** die Anfangsposition (131) und/oder eine oder beide der entfernten Positionen (133, 134) einen Magneten umfassen/umfasst, der geeignet ist, mit wenigstens einem metallischen Teil des Teils (13) zusammenzuwirken, um es dort zu stabilisieren.

12. Vorrichtung nach einem der Ansprüche 1 bis 11, **dadurch gekennzeichnet, dass** die Anfangsposition (131) und/oder eine oder beide der entfernten Positionen (133, 134) mit einem Anschlagpuffer ausgestattet sind/ist, der geeignet ist, eine Stoßwirkung zwischen dem Teil (13) und einer Wand des Festkörpers zu dämpfen.

**Claims**

1. Device (1) for measuring an acceleration of a moving body, said device comprising:

- a solid body comprising an internal cavity (12) capable of allowing for the free movement of a moving part (13);
- said cavity (12), at least one wall of which is capable of forming a sloping track (121), one surface of which allows for said free movement of said moving part (13) on said track (121) in said cavity (12) between an initial position (131) at rest and a position (133) distant from said initial position situated at an end of said cavity (12) and reachable by said part (13) during a variation in said acceleration;
- said part (13) capable of moving from said initial position to said distant position in said cavity (12) under the effect of the acceleration of said moving body;
- at least one detector (14) capable of detecting a presence of said part (13) at said distant position;

**characterised in that** said solid body comprises a central part (111) comprising an opening intended to form at least one part of said cavity (12), said central part (111) being sandwiched between two lateral parts (15)

2.  Device according to claim 1, **characterised in that** said central part (111) comprises said track (121).

3.  Device according to either claim 1 or claim 2, **characterised in that** said detector (14) can be positioned opposite said distant position (133).

4.  Device according to one of claims 1 to 3, **characterised in that** said detector (14) is an inductive sensor and said part (13) comprises at least one metal part.

5.  Device according to one of claims 1 to 3, **characterised in that** said detector (14) is an optical sensor and said part is opaque (13).

6.  Device according to one of claims 1 to 5, **characterised in that** said solid body is capable of being coupled to said moving body and said detector (14) to cooperate with a braking system (22) of said moving body.

7.  Device according to one of claims 1 to 6, **characterised in that** said track (121) is a flat surface intended to form a plane inclined at an angle θ with respect to the horizontal when said solid body is coupled to said moving body at rest on a horizontal plane.

8.  Device according to one of claims 1 to 7, **characterised in that** said cavity (12) is perceptibly parallelepiped in shape.

9.  Device according to one of claims 1 to 6, **characterised in that** said track (121) is a strip describing a curvilinear trajectory.

10. Device according to one of claims 1 to 9, **characterised in that** said solid body comprises another cavity (16) symmetrical with said cavity (12), communicating with the latter and comprising another track capable of forming with said track (121) of said cavity (12) a continuous path between said distant position (133) situated at an end of said cavity (12) and another distant position (134) situated at an end of the other cavity (16).

11. Device according to one of claims 1 to 10, **characterised in that** at least one of said initial (131) or distant (133, 134) positions includes a magnet capable of cooperating with at least one metal part of said part (13) in order to stabilise it there.

12. Device according to one of claims 1 to 11, **characterised in that** at least one of said initial (131) or distant (133, 134) positions is fitted with a buffer capable of absorbing a shock effect between said part (13) and a wall of the solid body.

FIG 1

A

B

FIG 2

FIG 3

FIG 4

**EP 2 691 780 B1**

## RÉFÉRENCES CITÉES DANS LA DESCRIPTION

**Documents brevets cités dans la description**

- GB 2211942 A
- DE 4114992 C2
- US 4849655 A
- US 5659137 A
- US 3147391 A
- US 5134883 A